# DEMANDE DE BREVET EUROPEEN

(11) **EP 4 755 364 A1**
(43) Date de publication de la demande: **10.06.2026**
(21) Numéro de dépôt: 25220250.2
(22) Date de dépôt: 02.12.2025
(51) Int. Cl.: A61G 17/04, A01G 5/04

(54) **COUVRE-CERCUEIL FLORAL, CERCUEIL COMPRENANT UN TEL COUVRE-CERCUEIL ET PROCÉDÉ DE FABRICATION D'UN TEL CERCUEIL**

(30) Priorité: 03.12.2024 FR 2413369
(71) Demandeur: Goury, Romain, 41000 Blois (FR)
(72) Inventeur: Goury, Romain, 41000 Blois (FR)
(74) Mandataire: Fidal Innovation

(57) **Abrégé**

L'invention concerne un couvre-cercueil floral comportant une planche en bois naturel adaptée à une forme de cercueil parisien et entouré de bordure surélevée également en bois naturel. Ce couvre-cercueil floral est destiné à être fixé sur le dessus du cercueil par un système de fixation simple.

Il se distingue par sa capacité à intégrer une mousse biodégradable destinée à accueillir une composition florale, tout en s'harmonisant naturellement avec la forme du cercueil, offrant ainsi une esthétique adoucie.

Contrairement aux gerbes traditionnelles qui sont retirées avant l'inhumation ou la crémation, ce couvre-cercueil est pensé pour rester en place et être intégré au processus funéraire sans poser de problèmes techniques ou environnementaux.

## Description

### DOMAINE TECHNIQUE DE L'INVENTION

L'invention appartient au domaine des articles funéraires et concerne un couvre-cercueil floral spécialement conçu pour s'intégrer sur le dessus du cercueil et accompagner les différentes étapes des obsèques, y compris l'inhumation et la crémation. Elle allie notamment des aspects esthétiques et spirituels tout en répondant aux exigences techniques et environnementales des pratiques contemporaines.

### ARRIERE-PLAN TECHNOLOGIQUE

Dans le domaine des services funéraires, l'accompagnement floral est un élément central des cérémonies, symbolisant l'hommage et le lien spirituel avec le défunt. Actuellement, les compositions florales sont généralement disposées autour du cercueil ou posées sur le cercueil ou encore sous forme de gerbes déposées à proximité. Cependant, d'une part les compositions florales doivent être transportées indépendamment du cercueil, et d'autre part, que ce soit pour une crémation ou une inhumation, ces compositions florales sont systématiquement retirées avant les étapes finales.

Lors de la crémation, les compositions florales actuelles posent des problèmes techniques en raison de la présence de matériaux non combustibles (métaux, plastiques), incompatibles avec les contraintes des fours des crématoriums. Dans le cas d'une inhumation, les fleurs ne sont généralement pas inhumées avec le cercueil, privant les familles d'un dernier hommage floral complet.

Les solutions existantes ne permettent pas d'intégrer pleinement un ornement floral durant l'intégralité des obsèques, que ce soit pour l'inhumation ou bien la crémation. De plus, les compositions florales actuelles ne répondent pas aux contraintes environnementales croissantes et aux exigences strictes des crématoriums, notamment en termes de production de résidus et d'émissions polluantes.

Les solutions actuellement connues permettant de disposer d'éléments d'ornements floraux sur des cercueils peuvent soulever en particulier les problèmes suivants :
- Pour la crémation : Incompatibilité des compositions florales traditionnelles en raison des matériaux utilisés, générant des résidus non combustibles ou des émissions polluantes, et nécessitant leur retrait avant la crémation.
- Pour l'inhumation : Les fleurs sont retirées avant la mise en terre pour des raisons pratiques, logistiques ou esthétiques, limitant leur rôle d'accompagnement symbolique jusqu'à la mise en terre.

Le document FR2682023 décrit une barre qui sert de support à un corps en matière plastique permettant d'y piquer notamment des fleurs. La barre peut prendre plusieurs formes. Toutefois, une telle barre est inadaptée pour assurer un accompagnement floral tout au long des rites funéraires.

Ainsi, les solutions actuellement connues ne permettent pas d'assurer un accompagnement floral continu tout au long des obsèques, de la cérémonie jusqu'à la crémation ou l'inhumation. Par ailleurs, les solutions actuellement connues n'intègrent pas suffisamment les enjeux écologiques croissants, tels que la biodégradabilité ou l'absence de résidus polluants, enjeux auxquels les acteurs de l'accompagnement funéraires sont de plus en plus sensibilisés et sensibles, voire sont confrontés par des réglementations.

Il résulte qu'il existe un besoin pour une solution permettant de mieux accompagner les défunts avec un ornement floral tout au long des rites funéraires.

### RESUME DE L'INVENTION

La présente invention vise principalement à remédier aux insuffisances et aux limitations identifiées dans l'état de la technique.

L'invention proposée répond notamment aux problématiques précitées en introduisant un couvre-cercueil floral qui s'intègre harmonieusement et respectueusement sur un cercueil, et qui est conçu spécifiquement pour s'adapter aux contraintes des crématoriums et des inhumations. Ce couvre-cercueil permet de préserver la symbolique florale tout au long des obsèques, offrant ainsi une solution technique, écologique et émotionnelle répondant aux attentes des familles et aux normes modernes.

L'invention concerne ainsi un couvre-cercueil floral intégré, conçu pour s'intégrer directement au-dessus, c'est-à-dire sur le couvercle, à l'extérieur, d'un cercueil, notamment un cercueil de type parisien ou tombeau. Le couvre-cercueil floral est fabriqué à partir de bois naturel, non traité, un matériau écologique, garantissant une compatibilité parfaite avec les processus de crémation.

Plus précisément, l'invention concerne un couvre-cercueil floral, c'est-à-dire destiné à recevoir un ornement floral, qui comprend une planche, de préférence en bois, et de préférence encore en bois naturel non traité. La planche présente une face supérieure et une face inférieure, opposée à la face supérieure. Le couvre-cercueil comprend de plus des bordures surélevées fixées rigidement à la planche.

Par fixées rigidement, on signifie ici que les bordures peuvent être des éléments rapportés et fixés sur la planche, ou des éléments venus de matière avec la planche.

Les bordures surélevées forment un cadre surélevé sur la face supérieure de la planche, de manière à recevoir un ornement floral : l'ornement floral posé sur la face supérieure est retenu par les bordures surélevées.

Le couvre-cercueil comprend en outre un système de fixation destiné à réaliser une fixation entre la planche et un couvercle d'un cercueil.

Le couvre-cercueil floral permet ainsi d'assurer un accompagnement floral continu tout au long des obsèques, de la cérémonie jusqu'à la crémation ou l'inhumation. Il peut intégrer de plus pas suffisamment des enjeux écologiques, qui sont aujourd'hui croissants, tels que la biodégradabilité ou l'absence de résidus polluants.

L'invention peut concerner par ailleurs un couvre-cercueil floral comprenant une planche en bois naturel non traité accompagnée de bordures surélevées, adaptée à une fixation sur un cercueil par un système adapté, et comportant éventuellement des attaches de mousse biodégradable pour maintenir des compositions florales.

Par ailleurs, la surface du couvre-cercueil est spécialement conçue pour accueillir des ornements floraux, avec des attaches compatibles en matériaux biodégradables, facilitant ainsi l'intégration des fleurs. Cette planche de bois travaillée est conçue pour accueillir des ornements floraux naturels, permettant ainsi d'accompagner esthétiquement et symboliquement le défunt jusqu'à la crémation ou la mise en terre.
Le couvre-cercueil est conçu pour intégrer des fleurs naturelles pour les obsèques, mais une version pour l'exposition en magasin peut utiliser des fleurs stabilisées, ce qui assure une durabilité et une présentation esthétique prolongée.

Selon un mode de réalisation, la face inférieure de la planche est destinée à être en contact directement ou par l'intermédiaire d'une couche de colle du système de fixation avec le couvercle du cercueil. Plus précisément, cela signifie que la face inférieure de la planche affleure au même niveau que les bordures, formant une surface sensiblement plane, sensiblement parallèle à au moins une portion de la surface extérieure du couvercle de manière à pouvoir être appliqué contre ladite portion de la surface du couvercle.

Notamment, le cercueil doit pouvoir passer par des ouvertures avec des dimensions limitées, par exemple dans un caisson de transport, ou encore l'entrée d'un four de crémation. Le couvre-cercueil limite ainsi l'encombrement par-dessus le cercueil, de manière à conserver une dimension suivant la direction verticale qui est adaptée aux différents étapes d'une inhumation et/ou d'une crémation, de sorte que l'ornement floral sur le couvre-cercueil floral peut accompagner le cercueil tout au long de ces étapes.

La direction verticale est ici définie suivant son sens naturel, lorsque le couvre-cercueil est assemblé sur le couvercle d'un cercueil, lui-même posé en position horizontale attendue sur le sol.

La planche peut présenter une forme hexagonale en losange spécifiquement conçue pour s'adapter aux contours des cercueils parisiens et tombeaux, répondant aux standards traditionnels du secteur funéraire. Cette forme assure un ajustement optimal et une continuité esthétique. Elle peut toutefois être d'une autre forme, notamment adaptée à d'autres formes de cercueil.

Le couvre-cercueil est fixé par exemple par vissage ou bien par collage directement sur le dessus du cercueil, par exemple sur le couvercle du cercueil, assurant une installation rapide et sécurisée sur le dessus du cercueil, évitant tout mouvement accidentel, même lors du transport ou de la manipulation.

Cette invention a également pour objectif d'adoucir l'aspect visuel du cercueil, souvent perçu comme un élément fort et marquant pouvant susciter une émotion intense chez certaines personnes. En apportant une touche florale et apaisante, qui accompagne le cercueil à tout instant, elle contribue à atténuer l'impact émotionnel tout en offrant un hommage plus doux et réconfortant.

L'ensemble est conçu dans une démarche d'écoconception, avec des matériaux de préférence entièrement biodégradables. Cela permet en particulier une crémation propre, en limitant la production de résidus toxiques, voire sans production de résidus toxiques, ou une dégradation naturelle harmonieuse lors d'une inhumation, tout en respectant les normes environnementales actuelles. Cette combinaison de praticité, d'esthétique et de durabilité en fait une solution innovante et adaptée aux évolutions des pratiques funéraires tout en conservant les traditions du milieu.

Le couvre-cercueil selon l'invention peut de plus comporter une ou plusieurs des caractéristiques suivantes, qui peuvent être combinés entre elles :
- Le couvre-cercueil floral peut comprendre une planche en bois naturel non traitée accompagnée de bordures, de préférence périphériques, surélevées, le tout pouvant être adapté à une fixation sur le dessus d'un cercueil, et pouvant comporter des attaches biodégradables pour maintenir des compositions florales.
- La planche en bois naturel peut avoir une longueur comprise entre 160 cm (centimètres) et 170 cm, une largeur comprise entre 11 cm et 35 cm, et une épaisseur comprise entre 0,5 et 5 cm, pouvant permettre une compatibilité avec des cercueils de types variés tout en maintenant une résistance optimale et une facilité d'adaptation.
- Le couvre-cercueil floral peut posséder six côtés, de manière à prendre une forme hexagonale pouvant s'inspirer de la forme de cercueil parisien pouvant permettre une adaptation à divers types de cercueils et facilitant son installation.
- Les bordures surélevées de la planche mesurant entre 2 et 6 cm de largeur peuvent être réalisées en bois naturel biodégradable comme la planche et peuvent venir se visser, s'agrafer ou se coller à la base, le tout pouvant garantir la compatibilité avec les processus de crémation et d'inhumation sans produire de résidus polluants.
- Le couvre-cercueil floral peut être conçu pour accueillir des compositions florales et donc peut à cet effet comporter des supports en mousse biodégradables permettant de maintenir les fleurs de manière stable tout au long des obsèques.
- Le modèle destiné à l'exposition en magasin peut utiliser des fleurs stabilisées afin de garantir leur durabilité et de maintenir un aspect esthétique dans le temps, sans nécessiter de remplacement.

Selon un mode spécifique de réalisation, les bordures surélevées présentent un hauteur comprise entre 2,5 et 5 cm, de préférence bornes incluses. La hauteur des bordures surélevées peut de préférence être considérée à partir de la surface en contact avec le couvercle du cercueil, de sorte que la hauteur totale du couvre-cercueil comprenant la planche est le bordure est également comprise entre 2,5 et 5 cm, de préférence bornes incluses. Une telle hauteur de bordure permet d'assurer le maintien d'une composition florale sur le couvre-cercueil tout en limitant l'encombrement vertical de l'ensemble formé par le cercueil muni du couvre-cercueil. Un effet de profondeur suffisant est également assuré.

Selon un mode de réalisation, les bordure surélevées présentent une largeur comprise entre 2 et 6 cm, de préférence bornes incluses, de manière à rendre le cadre visible tout en permettant une surface suffisante pour mettre en place une composition florale sur la planche.

Selon un mode de réalisation, la planche et les bordures surélevées sont en bois naturel et biodégradable.

Selon un mode de réalisation, la planche présente une longueur comprise entre 162 et 167cm, de préférence bornes incluses, une envergure transversale comprise entre 30 et 35 cm, de préférence bornes incluses, une largeur à une extrémité supérieure comprise entre 16 et 21 cm, de préférence bornes incluses, et une largeur à l'extrémité inférieure comprise entre 11 et 16 cm, de préférence bornes incluses.

Selon un mode de réalisation, la planche peut présenter une épaisseur comprise entre 0,5 et 2 cm, de préférence bornes incluses.

Selon un mode de réalisation, le système de fixation comprend au moins l'un des dispositifs suivants : dispositif de vissage, dispositif d'agrafe et dispositif de collage.

Selon un deuxième aspect, l'invention peut concerner un procédé de fabrication et d'assemblage du couvre-cercueil floral tel que présenté ci-dessus, le procédé comprenant une étape de découpe pour obtenir la planche suivant une forme déterminée, par exemple hexagonale, en losange tronqué, une étape de fixation des bordures surélevées à la planche par vissage ou par collage, de préférence par colle à bois, et la mise en œuvre du système de fixation entre la planche et un cercueil. Typiquement, le cercueil peut présenter les longueurs de 175cm, 185cm ou 195cm, et peut être de type parisien ou tombeau.

Selon un troisième aspect, l'invention peut concerner un procédé de fabrication d'un couvre-cercueil floral comprenant la découpe d'une planche en bois naturel et son ajustement à la forme hexagonale en losange pour l'adaptation à un cercueil de 175cm, 185cm ou encore 195cm, de forme parisien ou tombeau.

La planche en bois et les bordures peuvent être non traitée, vernis ou non et biodégradable, et peut ainsi garantir une utilisation conforme aux normes environnementales lors des obsèques. La planche en bois et les bordures en bois naturel peuvent être teintes, mais pas nécessairement.

Selon un quatrième aspect, l'invention peut concerner un ensemble funéraire comprenant un cercueil et le couvre-cercueil floral tel que présenté ci-dessus, dans lequel la planche du couvre-cercueil est fixée au cercueil, notamment sur une surface extérieure du couvercle du cercueil, par le système de fixation.

### DESCRIPTION DES DESSINS

L'invention sera mieux comprise et d'autres caractéristiques et avantages apparaîtront plus clairement à la lecture de la description donnée ci-après à titre d'exemples purement illustratifs et non limitatifs, en référence aux dessins annexés dans lesquels :
- La [Fig. 1] présente un couvre-cercueil floral selon un mode de réalisation de l'invention, représenté successivement en vue de dessus et en vue latérale.
- La [Fig.2] présente une vue de détail en perspective latérale du couvre-cercueil de la Figure 1.

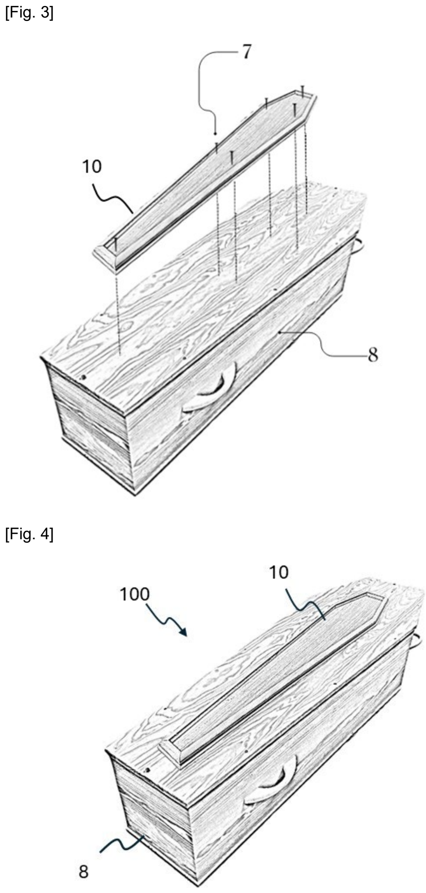

- La [Fig. 3] présente en vue en perspective le processus d'intégration d'un couvre cercueil floral à la base d'un cercueil parisien, conforme à l'invention.
- La [Fig. 4] présente un couvre-cercueil floral intégré sur un cercueil de type parisien conformément à l'invention.

### DESCRIPTION D'UN MODE DE REALISATION PREFERE DE L'INVENTION

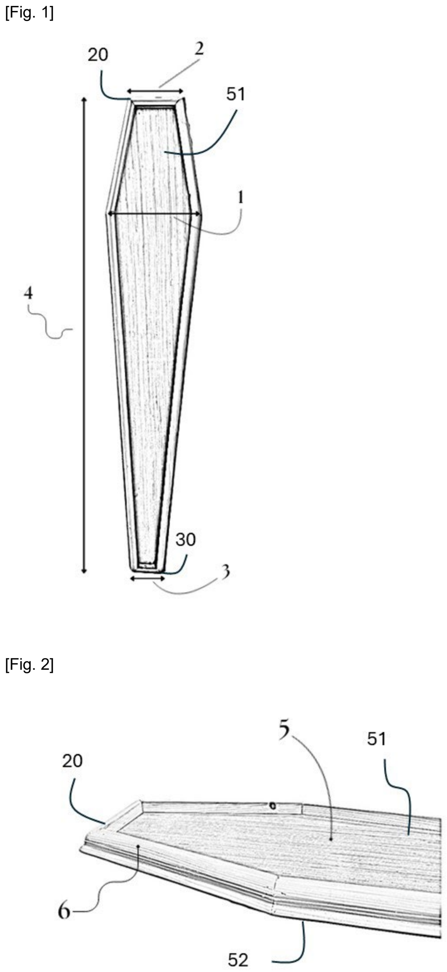

La figure 1 présente un couvre cercueil 10 selon un mode de réalisation conforme à l'invention. Comme illustré, le couvre-cercueil **10** comprend une planche 5 conforme à l'invention, fabriquée en bois naturel non traité, et soigneusement découpée pour correspondre à une forme de cercueils de type parisien. La planche 5 est de forme losangique tronquée à une extrémité supérieure 20 et à une extrémité inférieure 30, de manière à présenter une forme hexagonale irrégulière. Plus précisément, la planche 5 est caractérisée par :
- l'extrémité supérieure 20 de largeur 2 comprise entre 16 et 21 cm, de préférence bornes incluses, et idéalement voisine de 18 à 19 cm, de préférence bornes incluses ;
- l'extrémité inférieure 30 de largeur 3 comprise entre 11 et 16 cm, de préférence bornes incluses et idéalement voisine de 13 à 14 cm, de préférence bornes incluses. L'extrémité inférieure 30 est sensiblement parallèle à l'extrémité supérieure 20, et est de largeur inférieure à la largeur de l'extrémité supérieure 20 ;
- une largeur maximale située sur un axe transversal 1, par exemple au centre, sensiblement parallèle à l'extrémité supérieure 20 et à l'extrémité inférieure 30, entre 30 et 35 cm et idéalement voisine de 32 à 33 cm, de préférence bornes incluses ;
- une longueur totale **4** entre l'extrémité supérieure 20 et l'extrémité inférieure 30 qui est comprise entre 162 et 167 cm, de préférence bornes incluses, et idéalement voisine de 165 à 166 cm, de préférence bornes incluses, ce qui garantit une couverture équilibrée et adaptée à la taille standard des cercueils.

L'épaisseur de la planche 5 est comprise par exemple entre 0,5 à 2 cm, de préférence bornes incluses, ce qui offre une base solide tout en minimisant le poids total du couvre-cercueil.

La planche 5 comprend une première face dite supérieure 51, et une deuxième face dite inférieure 52 destinée à être entre en contact, directement ou indirectement via une couche de colle, avec le cercueil.

La planche **5** est bordée de bordures surélevées **6,** périphériques, qui suivent le contour de la planche 5, et dans le même matériau que celui de la planche 5, ou dans un matériau similaire tel qu'en bois naturel vernis ou non, qui s'élèvent entre 2,5 à 5 cm, de préférence bornes incluses, au-dessus d'une surface de base et peuvent faire entre 2 et 6 cm de largeur, de préférence bornes incluses, sur tout le contour de la planche 5 en bois naturel. Les bordures surélevées 6 du couvre-cercueil 10 peuvent être rapportées et fixées à la planche **5** par deux méthodes principales. La première consiste en un système de vis classique, permettant une fixation robuste et démontable. La seconde méthode utilise une colle à bois adaptée, assurant un assemblage uniforme et esthétique sans perforation visible.

Ces bordures surélevées **6** sont conçues pour remplir notamment deux fonctions. Premièrement, elles forment un cadre permettant d'accueillir et de contenir une composition florale, pouvant comporter une mousse florale, sur la face supérieure 51. Par exemple, lorsque la composition florale est réalisée par des éléments végétaux et floraux piqués dans de la mousse florale, la mousse est avantageusement retenue sur la surface de base, c'est-à-dire la planche 5, par les bordures surélevées 6. Deuxièmement, les bordures surélevées 6 jouent un rôle esthétique en ajoutant une dimension de profondeur et en renforçant l'impression visuelle d'un étage supplémentaire lorsque le couvre-cercueil est placé au-dessus du cercueil.

Les bordures surélevées 6 peuvent s'étendre de préférence de manière continue sur la périphérie de la planche 5, mais pas nécessairement.

Les bordures surélevées 6 dépassent, suivant la direction verticale, la face supérieure 51 de la planche, mais pas la face inférieure 52. De préférence, les bordures surélevées 6 affleurent la surface inférieure 52, de manière à former une surface sensiblement continue, dépourvue de marche entre la planche et les bordures surélevées 6.

Le couvre-cercueil floral 10 est conçu pour être positionné directement au centre du couvercle supérieur d'un cercueil 8, le couvre-cercueil 10 et le cercueil 8 formant ainsi un ensemble funéraire 100. Notamment, grâce à ses dimensions précises et à sa forme hexagonale ou losangique, le couvre-cercueil 10 repose de manière stable sur le cercueil 8 avec un système de fixation **7** simple à incorporer sur les différentes parties du couvre-cercueil 10. Une fois installé sur le cercueil 8, le couvre-cercueil 10 donne l'impression d'un deuxième étage, accentuant l'importance visuelle et spirituelle de l'hommage floral.

Cette surélévation esthétique est renforcée par les bordures surélevées 6 et par la disposition des ornements floraux, qui créent un effet visuel élégant et unique. L'ensemble est conçu pour s'intégrer parfaitement aux standards esthétiques et pratiques des cérémonies funéraires.

Le cadre formé par les bordures surélevées 6 est destiné notamment à accueillir une mousse florale, dans laquelle sont insérées les compositions florales, et/ou directement des éléments végétaux et floraux. Le couvre-cercueil 10 permet l'utilisation de fleurs naturelles, privilégiées pour les cérémonies funéraires, ou de fleurs stabilisées, adaptées aux modèles d'exposition en magasin. Cette modularité dans l'utilisation des fleurs assure une polyvalence fonctionnelle et une adaptation à différents contextes, tout en maintenant une présentation esthétique irréprochable.

## Revendications

1. Couvre-cercueil floral (10) comprenant une planche (5) comprenant une face supérieure (51) et une face inférieure (52), le couvre cercueil comprenant de plus des bordures surélevées (6) fixées rigidement à la planche (5), et formant un cadre surélevé sur la face supérieure (51) pour recevoir un ornement floral, le couvre cercueil comprenant de plus un système de fixation (7) destiné à réaliser une fixation entre la planche (5) et un couvercle d'un cercueil.

2. Couvre-cercueil (10) selon la revendication 1, dans lequel la face inférieure (52) de la planche (5) est destinée à être en contact directement ou par l'intermédiaire du système de fixation (7) avec le couvercle du cercueil.

3. Couvre-cercueil (10) selon la revendication 1 ou la revendication 2, dans lequel les bordures surélevées (6) présentent une hauteur comprise entre 2,5 et 5cm.

4. Couvre-cercueil selon la revendication 3, dans lequel les bordures surélevées (6) présentent une largeur comprise entre 2 et 6cm.

5. Couvre-cercueil floral (10) selon l'une quelconque des revendications précédentes, **caractérisé en ce que** la planche en bois naturel a une longueur (4) comprise entre 160 et 170 cm, une largeur maximale (1, 3) comprise entre 11 et 35 cm, et une épaisseur comprise entre 0.5 et 2 cm, permettant ainsi une compatibilité avec des cercueils de types variés tout en maintenant une résistance optimale et une facilité d'adaptation.

6. Couvre-cercueil floral (10) selon l'une quelconque des revendications précédentes, possède 6 côtés, de manière à présenter une forme hexagonale adaptée à la forme de cercueil de type parisien.

7. Couvre-cercueil (1, 4) selon l'une quelconque des revendications précédentes, dans lequel les bordures surélevées (6) et la planche (5) sont en bois naturel et biodégradable.

8. Couvre-cercueil (10) selon l'une quelconque des revendications précédentes, dans lequel le système de fixation (7) comprend au moins l'un des dispositifs suivant : dispositif de vissage, dispositif d'agrafe, et dispositif de collage.

9. Couvre-cercueil floral (10) selon l'une quelconque des revendications précédentes spécialement conçu pour accueillir des compositions florales, comportant des attaches en mousse biodégradables permettant de maintenir les fleurs de manière stable tout au long du processus des obsèques.

10. Couvre-cercueil floral (10) selon l'une quelconque des revendications précédentes, dans lequel les bordures surélevées (6) sont rapportées et sont fixées sur la planche (5) par vissage ou collage.

11. Procédé de fabrication et d'assemblage d'un couvre-cercueil floral (10) selon l'une quelconque des revendications précédentes, comprenant une étape de découpe pour obtenir la planche suivant une forme déterminée, une étape de fixation des bordures surélevées (6) à la planche (5) par vissage ou par collage, et la mise en œuvre du système de fixation (7) entre la planche (5) et un cercueil (8).

12. Ensemble funéraire (100) comprenant un cercueil (8) et au moins un couvre-cercueil floral (10) selon l'une quelconque des revendications 1 à 10, la planche (5) du couvre-cercueil (10) étant fixée au cercueil (101) par le système de fixation (7).
